# EUROPEAN PATENT APPLICATION

(11) **EP 4 610 326 A1**
(43) Date of publication of application: **03.09.2025**
(21) Application number: 23882787.7
(22) Date of filing: 30.10.2023
(51) Int. Cl.: C09K 5/06, B22F 1/00, B22F 1/14, C22C 32/00

(54) **LATENT HEAT STORAGE MATERIAL COMPOSITION, LATENT HEAT STORAGE MATERIAL MOLDED BODY, AND METHOD FOR PRODUCING LATENT HEAT STORAGE MATERIAL MOLDED BODY**

(30) Priority: 28.10.2022 JP 2022172814
(71) Applicant: Nippon Shokubai Co., Ltd., Osaka-shi, Osaka 541-0043 (JP)
(72) Inventor: HIGUCHI, Yasuhiro, Suita-shi, Osaka 564-0034 (JP); FURUSHO, Kazuki, Himeji-shi, Hyogo 671-1292 (JP); ONO, Hironobu, Himeji-shi, Hyogo 671-1292 (JP)
(74) Representative: Crow, Martin
(86) International application number: PCT/JP2023/039079
(87) International publication number: WO 2024/090586

(57) **Abstract**

There is provided a latent heat storage material composition which hardly causes defects such as metal leakage and cracking when processed into a molded body, has sufficient mechanical strength, and has a favorable heat storage property and a favorable heat dissipation property, a latent heat storage material molded body produced by molding the latent heat storage material composition, and a method for producing the latent heat storage material molded body. The latent heat storage material composition including a latent heat storage material (A) in which a core particle including an Al-Si alloy is coated with an aluminum oxide film, and a calcium compound (B), in which a content proportion of the calcium compound (B) relative to the latent heat storage material (A) is 1 mass% or more and 40 mass% or less, is provided.

## Description

### Technical Field

The present invention relates to a latent heat storage material composition, a latent heat storage material molded body produced by molding the latent heat storage material composition, and a method for producing a latent heat storage material molded body.

### Background Art

As a method for storing heat, sensible heat storage using a temperature change (for example, Patent Document 1) and latent heat storage using a phase change of a substance (for example, Patent Document 2) are known. Among them, a sensible heat storage technology is capable of storing heat at a high temperature, but uses only sensible heat due to a temperature change of a substance, and thus has a low heat storage density, which is an issue. As a method for solving such an issue, there is proposed a latent heat storage technology for storing heat by using latent heat of a molten salt or the like.

Various aspects of heat storage bodies to be used in the latent heat storage technology have been proposed. For example, Patent Document 3 discloses inventions such as a latent heat storage capsule characterized by covering a surface of a latent heat storage material with a metal film of one layer, two layers, or three layers, and a method for producing a latent heat storage capsule characterized by coating a latent heat storage material with a metal film by an electrolytic plating method. In addition, Patent Document 4 discloses an alloy-based latent heat storage microcapsule (micro-encapsulated phase change material: hereinafter abbreviated as MEPCM) in which, in a latent heat storage body including a core portion and a shell covering the core portion, for the shell, a core particle is subjected to a chemical conversion coating treatment and further subjected to a thermal oxidation treatment to form an oxide film.

### Citation List

### Patent Document

Patent Document 1: JP H06-50681 A
Patent Document 2: JP H10-238979 A
Patent Document 3: JP H11-23172 A
Patent Document 4: WO 2015/162929

### Summary of Invention

However, as a result of various studies on the MEPCM, it has been found that when the MEPCM is processed into a molded article, defects such as leakage of the alloy of the core occur. It has been also found that the mechanical strength of the molded article itself is insufficient.

The present invention has been made in view of such issues of the MEPCM in the related art, and is directed to providing a latent heat storage material composition which, when formed into a molded article, is less likely to cause defects such as metal leakage and cracking, has sufficient mechanical strength, and has a favorable heat storage property and a favorable heat dissipation property.

Another object of the present invention is to provide a latent heat storage material molded body which is less likely to cause defects such as metal leakage and cracking, has sufficient mechanical strength, and has a favorable heat storage property and a favorable heat dissipation property, and a method for producing the same.

The present inventors have made various studies to achieve the above-described objects, and have arrived at the present invention. As a result, the present inventors have found that the above-described issues can be solved by a latent heat storage material composition containing a latent heat storage material and a calcium compound at predetermined proportions, a latent heat storage material molded body using the latent heat storage material composition, and a method for producing the molded body, and have completed the present invention.

That is, the above objects can be achieved by the present invention having the following configurations, and the present invention includes the following aspects and embodiments.

One aspect of the present invention provides the following.
1. A latent heat storage material composition containing:
   a latent heat storage material (A) in which a core particle containing an AL-Si alloy is coated with an aluminum oxide film; and
   a calcium compound (B),
   in which
   a content proportion of the calcium compound (B) relative to the latent heat storage material (A) is 1 mass% or more and 40 mass% or less.
2. The latent heat storage material composition according to 1 above preferably includes an inorganic binder and/or an organic binder.
3. In the latent heat storage material composition according to 1 or 2 above, the calcium compound (B) is preferably one or more selected from the group consisting of calcium oxide, calcium hydroxide, calcium carbonate, limestone, gypsum, and wollastonite.
   One aspect of the present invention provides the following.
4. A latent heat storage material molded body produced by molding the latent heat storage material composition described in any one of 1 to 3 above.
5. In the latent heat storage material molded body according to 4 above, the latent heat storage material molded body preferably contains calcium in an amount of 3 mass% or more and less than 20 mass% in terms of oxide.
6. The latent heat storage material molded body according to 4 or 5 above preferably has one or more shapes selected from the group consisting of a cylindrical shape, a pellet shape, a spherical shape, a ring shape, a plate shape, a rod shape, and a honeycomb shape.
   One aspect of the present invention provides the following.
7. A method for producing a latent heat storage material molded body, the method including:
   (1) mixing: a latent heat storage material (A) in which a core particle containing an Al-Si alloy is coated with an aluminum oxide film; and a calcium compound (B), in such a manner that a content (mass) proportion of the calcium compound (B) relative to the latent heat storage material (A) is 1 mass% or more and 40 mass% or less to prepare a latent heat storage material composition;
   (2) molding the latent heat storage material composition; and
   (3) firing the molded composition at 700°C or higher.
8. In the production method according to 7, it is preferable to further add an inorganic binder and/or an organic binder, followed by mixing.
9. In the production method according to 7 or 8 above, the calcium compound (B) is preferably one or more selected from the group consisting of calcium oxide, calcium hydroxide, calcium carbonate, limestone, gypsum, and wollastonite.
10. In the production method according to any one of 7 to 9 above, the latent heat storage material composition is preferably molded into one or more shapes selected from the group consisting of a cylindrical shape, a pellet shape, a spherical shape, a ring shape, a plate shape, a rod shape, and a honeycomb shape.
11. In the production method according to any one of 7 to 10 above, the latent heat storage material molded body preferably contains calcium in an amount of 3 mass% or more and less than 20 mass% in terms of oxide.
12. In the production method according to any one of 7 to 11 above, the latent heat storage material (A) and the calcium compound (B) are preferably mixed together with a dispersion medium.

### Description of Embodiments

One embodiment of the present invention is a latent heat storage material composition containing: a latent heat storage material (A) in which a core particle containing an Al-Si alloy is coated with an aluminum oxide film; and a calcium compound (B), in which a content (mass) proportion of the calcium compound (B) relative to the latent heat storage material (A) is 1 mass% or more and 40 mass% or less. When the latent heat storage material composition having the above-described configuration is molded, it is possible to produce a molded body which is less likely to cause defects such as metal leakage and cracking (that is, excellent processing stability), has sufficient mechanical strength, and has a favorable heat storage property and a favorable heat dissipation property.

Another embodiment of the present invention is a latent heat storage material molded body produced by molding the above-described latent heat storage material composition. The latent heat storage material molded body is less likely to cause defects such as metal leakage and cracking (that is, excellent in processing stability), has sufficient mechanical strength, and has a favorable heat storage property and a favorable heat dissipation property.

Still another embodiment of the present invention is a method for producing a latent heat storage material molded body, the method including: (1) mixing: a latent heat storage material (A) in which a core particle containing an Al-Si alloy is coated with an aluminum oxide film, and a calcium compound (B) to prepare a latent heat storage material composition; (2) molding the latent heat storage material composition; and (3) firing the molded composition at 700°C or higher. The latent heat storage material molded body produced by the production method is less likely to cause defects such as metal leakage and cracking (that is, excellent in processing stability), has sufficient mechanical strength, and has a favorable heat storage property and a favorable heat dissipation property.

Hereinafter, the present invention will be described in detail. Note that the present invention is not limited to the following embodiments. In the present specification, unless otherwise specified, operations and measurement of physical properties and the like are performed under conditions of room temperature (20°C or higher and 25°C or lower) and a relative humidity of 40% RH or higher and 50% RH or lower.

Throughout the present specification, it should be understood that a singular expression includes a concept of its plural form unless otherwise specified. Thus, it should be understood that a singular article (for example, "a", "an", "the", and the like in the case of English) includes a concept of its plural form unless otherwise specified. It should also be understood that the terms used herein are used having the meanings commonly used in the art, unless otherwise specified. Accordingly, unless defined otherwise, all technical and scientific terms used herein have the same meaning as commonly understood by those skilled in the art to which the present invention belongs. In a case where there is any conflict, the present specification, including definitions, will prevail. The present invention is not limited to the following embodiments, and can be variously modified within the scope of the claims. In the present specification, "X to Y" means a range including numerical values (X and Y) described before and after "to" as a lower limit value and an upper limit value respectively, and means "X or more and Y or less". In addition, a concentration "% " represents a mass concentration "mass%" unless otherwise specified, and a ratio is a mass ratio unless otherwise specified.

Note that a combination of two or more of preferred embodiments of the present invention described below is also a preferred embodiment of the present invention.

### Latent Heat Storage Material Composition

A latent heat storage material composition of the present invention includes a latent heat storage material (A) in which a core particle containing an Al-Si alloy is coated with an aluminum oxide film, and a calcium compound (B), and a content proportion of the calcium compound (B) relative to the latent heat storage material (A) is 1 mass% or more and 40 mass% or less.

As described above, when the latent heat storage material composition having such a configuration is molded, defects such as metal leakage and cracking are less likely to occur (that is, excellent in processing stability), and the molded article has sufficient mechanical strength and a favorable heat storage property and a favorable heat dissipation property. The mechanism by which the latent heat storage material composition of the present invention exhibits such effects is not clear, but the following is considered.

First, when the specific latent heat storage material (A) and the calcium compound (B) are contained at predetermined proportions, the calcium compound (B) acts on the aluminum oxide film of the latent heat storage material (A) at the time of molding the latent heat storage material composition, which makes the film less likely to be cracked. This suppresses metal leakage. Furthermore, it is considered that the calcium compound (B) promotes adhesion in the latent heat storage material (A), and thus cracking of the molded body itself is suppressed, and the mechanical strength is also improved. In addition, it is considered that the heat storage property and the heat dissipation property are sufficiently maintained even after molding because metal leakage hardly occurs. Note that the above-described mechanism is based on presumption, and the present invention is not limited to the above-described mechanism.

The latent heat storage material composition and the latent heat storage material molded body according to one embodiment contain the calcium compound (B) in an amount of preferably 3 mass% or more and 20 mass% or less, preferably 5 mass% or more, preferably 8 mass% or more, and preferably 10 mass% or more in terms of oxide.

### Latent Heat Storage Material (A)

The latent heat storage material (A) to be used in the latent heat storage material composition of the present invention is an alloy-based latent heat storage material in which a core particle composed of an Al-Si alloy is coated with an aluminum oxide film.

The lower limit of a content of the latent heat storage material (A) in the latent heat storage material composition according to one embodiment is preferably 60 mass% or more, more preferably 65 mass% or more, even more preferably 70 mass% or more, and particularly preferably 75 mass% or more in terms of solid content with respect to the mass of the total solid content of the latent heat storage material composition. The upper limit of the content of the latent heat storage material (A) is preferably 97 mass% or less, more preferably 95 mass% or less, even more preferably 90 mass% or less, particularly preferably 85 mass% or less, and most preferably 80 mass% or less in terms of solid content with respect to the mass of the total solid content of the latent heat storage material composition. That is, the content of the latent heat storage material (A) in the latent heat storage material composition according to one embodiment may be 60 mass% or more and 97 mass% or less, 60 mass% or more and 95 mass% or less, 60 mass% or more and 90 mass% or less, 60 mass% or more and 85 mass% or less, 60 mass% or more and 80 mass% or less, 65 mass% or more and 97 mass% or less, 65 mass% or more and 95 mass% or less, 65 mass% or more and 90 mass% or less, 65 mass% or more and 85 mass% or less, 65 mass% or more and 80 mass% or less, 70 mass% or more and 97 mass% or less, 70 mass% or more and 95 mass% or less, 70 mass% or more and 90 mass% or less, 70 mass% or more and 85 mass% or less, 70 mass% or more and 80 mass% or less, 75 mass% or more and 97 mass% or less, 75 mass% or more and 95 mass% or less, 75 mass% or more and 90 mass% or less, 75 mass% or more and 85 mass% or less, or 75 mass% or more 80 mass% or less in terms of solid content. When the content of the latent heat storage material (A) is within the above range, the heat storage property and the heat dissipation property are further improved while the strength as the latent heat storage material composition or the molded body of the latent heat storage material composition is maintained.

The average particle size of the latent heat storage material (A) according to one embodiment is preferably 1 µm or more and 600 µm or less, more preferably 5 µm or more and 250 µm or less, and even more preferably 10 µm or more and 150 µm or less. When the average particle size of the latent heat storage material (A) is within the above range, the mechanical strength and processing stability of the molded body can be further improved.

### Core Particle

The Al-Si alloy contained in the core particle of the latent heat storage material (A) only need be an alloy including aluminum and silicon. However, the content of silicon in the Al-Si alloy is preferably 4 mass% or more and 40 mass% or less, more preferably 8 mass% or more and 30 mass% or less, even more preferably 10 mass% or more and 25 mass% or less, and particularly preferably 12 mass% or more and 25 mass% or less. The content of aluminum in the Al-Si alloy is preferably 60 mass% or more and 96 mass% or less, more preferably 70 mass% or more and 92 mass% or less, and even more preferably 75 mass% or more and 90 mass% or less. When the contents of silicon and aluminum in the Al-Si alloy are within the above-described ranges, a volumetric expansion rate at the time of phase change from a solid phase to a liquid phase can be suppressed to a low level, and thus the durability as an MEPCM can be enhanced and metal leakage is less likely to occur.

The Al-Si alloy may contain inevitable impurities in addition to aluminum and silicon. The term "inevitable impurities" refers to those that are present in raw materials or are inevitably mixed in a production process. The inevitable impurities are originally unnecessary, but are allowed because they are trace amounts and do not affect properties of the Al-Si-based alloy. As the inevitable impurities, for example, titanium (Ti), iron (Fe), or nickel (Ni) can be contained in an amount of 0.2 mass% or less (lower limit: 0 mass%), and copper (Cu), manganese (Mn), lead (Pb), cadmium (Cd), or the like can be contained in an amount of 0.01 mass% or less (lower limit: 0 mass%) or 0.005 mass% or less (lower limit: 0 mass%).

The proportion of the Al-Si alloy contained in the core particle is preferably 80 mass% or more, more preferably 90 mass% or more, even more preferably 95 mass% or more, and particularly preferably 100 mass%, with respect to the total mass of the core particle. When the proportion of the Al-Si alloy contained in the core particle is within the above range, the function as a latent heat storage material such as a heat storage amount and a heat dissipation amount is further improved.

Note that the Al-Si alloy can be produced by a known method in the related art.

The average particle size of the core particle of the latent heat storage material (A) according to one embodiment is preferably 1 µm or more, more preferably 5 µm or more, and even more preferably 10 µm or more. When the particle size is within the above range, the ratio of a shell portion to a core portion responsible for heat storage becomes appropriate, and a decrease in heat storage density can be prevented. The average particle size of the core particle of the latent heat storage material (A) according to one embodiment is preferably 500 µm or less, more preferably 200 µm or less, and particularly preferably 100 µm or less. The latent heat storage material expands and contracts when the core portion melts and solidifies during repeated use. However, when the particle size is in the above-described range, the proportion of a core relative to a shell is appropriate, and thus it is possible to effectively prevent metal leakage that occurs when the shell cannot withstand stress. That is, the average particle size of the core particle of the latent heat storage material (A) according to one embodiment is preferably 1 µm or more and 500 µm or less, more preferably 5 µm or more and 200 µm or less, and even more preferably 10 µm or more and 100 µm or less.

Here, the average particle size of the core particle is a value measured by the method described in Examples. The cumulative 90% volume size of the core particle of the latent heat storage material (A) is preferably 10 µm or more and 100 µm or less, more preferably 20 µm or more and 80 µm or less, and even more preferably 30 µm or more and 70 µm or less.

### Aluminum Oxide Film

The aluminum oxide film is not particularly limited, and may be a single layer or may include a plurality of layers. For example, α-Al₂O₃ is preferably contained as a component, but not limited thereto. Components constituting the aluminum oxide film are not limited to aluminum oxide, and may include other elements and/or inevitable impurities.

The thickness of the aluminum oxide film is not particularly limited, but is preferably 0.1 µm or more and 10 µm or less, and more preferably 0.5 µm or more and 5 µm or less. When the thickness of the aluminum oxide film is within the above range, the aluminum oxide film can sufficiently cover the surface of the core particle composed of the Al-Si alloy while maintaining the heat storage property and the heat dissipation property, which makes metal leakage less likely to occur. The thickness of the aluminum oxide film can be determined by subtracting the average particle size of the core particle from the average particle size of the latent heat storage material and then dividing the resulting value by 2.

### Method for Producing Latent Heat Storage Material (A)

A method for producing the latent heat storage material (A) is not particularly limited, and a known method can be used. However, it is preferable to use aluminum hydroxide having a crystal structure of boehmite as a raw material of aluminum for forming the aluminum oxide film on the core particle composed of the Al-Si alloy. When aluminum hydroxide having a crystal structure of boehmite (AlOOH) is used, a dense oxide film can be formed.

The aluminum oxide film can be formed by putting the core particle composed of the Al-Si alloy into an aqueous solution containing aluminum hydroxide having a crystal structure of boehmite. The content of aluminum hydroxide in the aqueous solution is preferably 0.5 parts by mass to 25 parts by mass, and more preferably 1 part by mass to 15 parts by mass with respect to 100 parts by mass of the core particle. When the content of aluminum hydroxide in the aqueous solution is within the above range, a sufficient oxide film can be formed on the surface of the core particle.

A small amount of ammonia or the like is preferably added to the aqueous solution described above. The higher the pH value is, the better the resulting aluminum oxide film tends to be. The pH of the aqueous solution is preferably 6.0 or more and less than 11.0, more preferably 7.0 to 10.5, and even more preferably 8.5 to 10.0 at normal temperature.

The reaction temperature for forming the aluminum oxide film is preferably 60°C to 100°C, more preferably 70°C or higher, even more preferably 80°C or higher, and particularly preferably 90°C or higher. The upper limit of the temperature is the boiling point of the aqueous solution, which is 100°C under normal pressure. The reaction time is preferably 0.25 to 24 hours, and more preferably 0.5 to 5 hours.

In the method for producing the latent heat storage material (A) according to one embodiment, it is preferable that thermal oxidation treatment be further performed after the aluminum oxide film is formed on the core particle. As a result, the aluminum oxide film formed on the surface of the core particle is further oxidized, and the MEPCM of crystalline Al₂O₃ can be prepared.

The thermal oxidation treatment is preferably performed at a temperature higher than the melting point of the Al-Si alloy serving as the component of the core portion. In a case of an alloy having a silicon content of 4 to 40 wt.%, the melting temperature is 580°C, and heating is preferably performed at a temperature equal to or higher than that (for example, 700°C or higher). The treatment is more preferably performed at 800°C or higher, and even more preferably 900°C or higher. This is because an aluminum oxide film formed by thermal treatment has a crystal structure of γ-Al₂O₃ at a relatively low temperature of 800°C or lower, and a film having a crystal structure of α-Al₂O₃, which is considered to be chemically stable, is produced at a relatively high temperature of 880°C or higher. The upper limit is not particularly limited, but is preferably 1200°C or lower. The thermal treatment time is preferably 0.5 hours to 12 hours, and more preferably 2 hours to 5 hours. When the above-described thermal oxidation treatment is performed, the aluminum oxide film is more sufficiently oxidized, and a highly stable MEPCM can be produced.

Note that in one embodiment, the thermal oxidation treatment of the heat storage latent heat material (A) can be performed at the same time as a step (step 3) of firing a molded body, which is described below. The thermal oxidation treatment of the heat storage latent heat material (A) and the step of firing a molded body (step 3) may be performed separately. When the thermal oxidation treatment and the firing are performed at the same time, the production process can be simplified, and improvement in production efficiency and reduction in production cost can be expected.

### Calcium Compound (B)

The latent heat storage material composition of the present invention contains a calcium compound (B). The latent heat storage material composition contains the calcium compound (B) at a proportion of 1 mass% or more and 40 mass% or less relative to the latent heat storage material (A) (content of calcium compound (B)/content of latent heat storage material (A) × 100 (mass%)).

In addition, the latent heat storage material composition contains calcium preferably in an amount of 3 mass% or more and less than 20 mass%, more preferably contained in an amount of 5 mass% or more, even more preferably contained in an amount of 8 mass% or more, and particularly preferably contained in an amount of 10 mass% or more in terms of oxide. The upper limit is more preferably 18.5 mass% or less, and even more preferably 15 mass% or less. Note that the content (in terms of oxide) of calcium in the latent heat storage material composition can be calculated by analyzing a concentration of each element using an ICP emission spectrometer and then performing conversion in terms of oxide.

The calcium compound is a material containing calcium, and is a concept including not only a single compound but also a mineral containing the compound as a main component (for example, wollastonite containing calcium silicate as a main component). Here, the main component means that the compound is contained in an amount of 60 mass% or more, 70 mass% or more, 80 mass% or more, or 90 mass% or more in the total amount.

Examples of the calcium compound (B) include inorganic calcium compounds such as calcium oxide, calcium hydroxide, calcium fluoride, calcium chloride, calcium bromide, calcium carbide, calcium carbonate, calcium nitrate, calcium sulfate, calcium sulfite, calcium silicate, calcium phosphate, calcium hydroxyphosphate, calcium pyrophosphate, calcium hypochlorite, calcium chlorate, calcium chromate, calcium tungstate, calcium molybdate, calcium magnesium carbonate (double salt of calcium carbonate and magnesium carbonate), and hydroxyapatite; organic calcium compounds such as calcium acetate, calcium stearate, and calcium lactate; and calcium minerals such as limestone, gypsum, wollastonite, scheelite, anorthite, dolomite, hydroxyapatite, calcite, and fluorite, and two or more of these may be used in combination. Among them, from the viewpoint of improving the processing stability of the latent heat storage material composition, the calcium compound (B) is preferably calcium oxide, calcium hydroxide, calcium carbonate, limestone, gypsum, and/or wollastonite, and more preferably one or more selected from the group consisting of calcium hydroxide, calcium carbonate, and wollastonite.

That is, the calcium compound (B) may be one or more selected from the group consisting of calcium oxide, calcium hydroxide, calcium fluoride, calcium chloride, calcium bromide, calcium carbide, calcium carbonate, calcium nitrate, calcium sulfate, calcium sulfite, calcium silicate, calcium phosphate, calcium hydroxyphosphate, calcium pyrophosphate, calcium hypochlorite, calcium chlorate, calcium chromate, calcium tungstate, calcium molybdate, calcium magnesium carbonate (double salt of calcium carbonate and magnesium carbonate), hydroxyapatite, calcium acetate, calcium stearate, calcium lactate, limestone, gypsum, wollastonite, scheelite, anorthite, dolomite, hydroxyapatite, calcite, and fluorite. The calcium compound (B) may be one or more selected from the group consisting of calcium oxide, calcium hydroxide, calcium carbonate, limestone, gypsum, and wollastonite, may be one or more selected from the group consisting of calcium hydroxide, calcium carbonate, and wollastonite, and may be one or more selected from the group consisting of calcium carbonate and wollastonite. Note that in the present specification, calcium silicate includes calcium silicate having various chemical compositions such as CaSiO₃, Ca₂SiO₄, Ca₃SiO₅, and Ca₃Si₂O₇.

In the latent heat storage material composition, the content proportion of the calcium compound (B) relative to the latent heat storage material (A) is 1 mass% or more and 40 mass% or less, but the lower limit of the ratio is preferably 5 mass% or more, more preferably 7 mass% or more, even more preferably 10 mass% or more, particularly preferably 15 mass% or more, and most preferably 20 mass% or more. The upper limit of the proportion is preferably 35 mass% or less, more preferably 30 mass% or less, and even more preferably 28 mass% or less. That is, the proportion may be 1 mass% or more and 35 mass% or less, 1 mass% or more and 30 mass% or less, 1 mass% or more and 28 mass% or less, 5 mass% or more and 40 mass% or less, 5 mass% or more and 35 mass% or less, 5 mass% or more and 30 mass% or less, 5 mass% or more and 28 mass% or less, 7 mass% or more and 40 mass% or less, 7 mass% or more and 35 mass% or less, 7 mass% or more and 30 mass% or less, 7 mass% or more and 28 mass% or less, 10 mass% or more and 40 mass% or less, 10 mass% or more and 35 mass% or less, 10 mass% or more and 30 mass% or less, 10 mass% or more and 28 mass% or less, 15 mass% or more and 40 mass% or less, 15 mass% or more and 35 mass% or less, 15 mass% or more and 30 mass% or less, 15 mass% or more and 28 mass% or less, 20 mass% or more and 40 mass% or less, 20 mass% or more and 35 mass% or less, 20 mass% or more and 30 mass% or less, or 20 mass% or more and 28 mass% or less. When the content proportion of the calcium compound (B) relative to the latent heat storage material (A) is within the above range, the mechanical strength and the processing stability of the molded body can be further improved while the heat storage property and the heat dissipation property of the latent heat storage material composition and the molded body of the latent heat storage material composition are satisfactorily maintained.

### Binder

The latent heat storage material composition according to one embodiment preferably contains an inorganic binder and/or an organic binder. When these binders are contained, the processing stability when the latent heat storage material composition is molded is further improved, and the mechanical strength of the molded product itself is also further improved.

Examples of the inorganic binder include, but are not particularly limited to, zirconia, silica, alumina, and titania. Among these inorganic binders, silica and/or alumina are preferable, and it is more preferable to contain at least silica. Examples of the organic binder include celluloses such as methyl cellulose, carboxymethyl cellulose, hydroxyalkyl methyl cellulose, sodium carboxymethyl cellulose, and ethyl cellulose; alcohols such as polyvinyl alcohol; and lignin sulfonate. Among these binders, a single type may be used, or two or more types may be used in combination. However, in the present specification, the calcium compound (B) described above is not included in the binder.

As the binder, the processing stability when the latent heat storage material composition is molded is further improved, and the mechanical strength of the molded product itself is also further improved, and thus at least celluloses are preferably used as the binder, and at least methyl cellulose is more preferably used.

The content of the binder in the latent heat storage material composition according to one embodiment is preferably 15 mass% or less, more preferably 10 mass% or less, and even more preferably 5 mass% or less in terms of solid content with respect to the mass of the total solid content of the latent heat storage material composition. The lower limit of the content of the binder is not particularly limited, but is preferably 0.1 mass% or more, more preferably 0.2 mass% or more, even more preferably 0.4 mass% or more, particularly preferably 0.5 mass% or more, and most preferably 1 mass% or more in terms of solid content. That is, the content of the binder may be 0.1 mass% or more and 15 mass% or less, 0.1 mass% or more and 10 mass% or less, 0.1 mass% or more and 5 mass% or less, 0.2 mass% or more and 15 mass% or less, 0.2 mass% or more and 10 mass% or less, 0.2 mass% or more and 5 mass% or less, 0.4 mass% or more and 15 mass% or less, 0.4 mass% or more and 10 mass% or less, 0.4 mass% or more and 5 mass% or less, 0.5 mass% or more and 15 mass% or less, 0.5 mass% or more and 10 mass% or less, 0.5 mass% or more and 5 mass% or less, 1 mass% or more and 15 mass% or less, 1 mass% or more and 10 mass% or less, or 1 mass% or more and 5 mass% or less in terms of solid content with respect to the mass of the total solid content of the latent heat storage material composition. When the content of the binder is within the above range, the processing stability when the latent heat storage material composition is molded can be more sufficiently improved while the heat storage property and the heat dissipation property of the latent heat storage material composition or the molded body of the latent heat storage material composition are satisfactorily maintained, and the mechanical strength of the molded product can also be more improved. Note that when two or more types of binders are used, the content of the binder is the sum of contents of the respective binders.

### Additional Components

The composition of the present invention may contain additional components. Examples of the additional components include oxides such as magnesia (magnesium oxide) and ceria (cerium (IV) oxide), glass frit, and sintering aids such as silicon carbide.

### Latent Heat Storage Material Molded Body

A latent heat storage material molded body which is one embodiment of the present invention is a latent heat storage material molded body using the above-described latent heat storage material composition. That is, the latent heat storage material molded body is produced by molding the latent heat storage material composition. As a result, the latent heat storage material molded body is less likely to cause defects such as metal leakage and cracking, has sufficient mechanical strength, and has a favorable heat storage property and a favorable heat dissipation property.

The latent heat storage material molded body according to one embodiment contains calcium in an amount of preferably 3 mass% or more, more preferably 5 mass% or more, even more preferably 8 mass% or more, and particularly preferably 10 mass% or more in terms of oxide. The upper limit of calcium contained in the latent heat storage material molded body according to one embodiment is preferably less than 20 mass% in terms of oxide. That is, the latent heat storage material molded body according to one embodiment contains calcium in an amount of preferably 3 mass% or more and less than 20 mass%, more preferably 5 mass% or more and less than 20 mass%, even more preferably 8 mass% or more and less than 20 mass%, and particularly preferably 10 mass% or more and less than 20 mass% in terms of oxide. When the content of calcium (in terms of oxide) is within the above range, the latent heat storage material molded body has more sufficient mechanical strength.

Note that the content (in terms of oxide) of calcium in the latent heat storage material molded body can be calculated by analyzing a concentration of each element using an ICP emission spectrometer and then performing conversion in terms of oxide. More specifically, the method described in Examples can be employed.

The latent heat storage material molded body according to one embodiment is not particularly limited, but preferably has one or more shapes selected from the group consisting of a cylindrical shape, a pellet shape, a spherical shape, a ring shape, a plate shape, a rod shape, and a honeycomb shape. With such a shape, the latent heat storage material molded body becomes industrially easy to handle.

The size of the latent heat storage material molded body according to one embodiment is not particularly limited. For example, when the latent heat storage material molded body is cut by a plane in such a manner that the cut area is maximized, in a case where the shape of the cut surface (shape of the outer periphery) is a shape other than a polygon, the long side of a rectangle in which the cut surface is inscribed may be 0.1 mm or more, 0.5 mm or more, 1 mm or more, 1.5 mm or more, 2 mm or more, or 5 mm or more. The upper limit of the long side is not particularly limited, and may be 50 cm or less, 25 cm or less, 15 cm or less, 10 cm or less, 5 cm or less, or 1 cm or less. That is, the major axis may be 0.1 mm or more and 50 cm or less, 0.1 mm or more and 25 cm or less, 0.1 mm or more and 15 cm or less, 0.1 mm or more and 10 cm or less, 0.1 mm or more and 5 cm or less, 0.1 mm or more and 1 cm or less, 0.5 mm or more and 50 cm or less, 0.5 mm or more and 25 cm or less, 0.5 mm or more and 15 cm or less, 0.5 mm or more and 10 cm or less, 0.5 mm or more and 5 cm or less, 0.5 mm or more and 1 cm or less, 1 mm or more and 50 cm or less, 1 mm or more and 25 cm or less, 1 mm or more and 15 cm or less, 1 mm or more and 10 cm or less, 1 mm or more and 5 cm or less, 1 mm or more and 1 cm or less, 1.5 mm or more and 50 cm or less, 1.5 mm or more and 25 cm or less, 1.5 mm or more and 15 cm or less, 1.5 mm or more and 10 cm or less, 1.5 mm or more and 5 cm or less, 1.5 mm or more and 1 cm or less, 2 mm or more and 50 cm or less, 2 mm or more and 25 cm or less, 2 mm or more and 15 cm or less, 2 mm or more and 10 cm or less, 2 mm or more and 5 cm or less, 2 mm or more and 1 cm or less, 5 mm or more and 50 cm or less, 5 mm or more and 25 cm or less, 5 mm or more and 15 cm or less, 5 mm or more and 10 cm or less, 5 mm or more and 5 cm or less, or 5 mm or more and 1 cm or less. Here, shapes other than the polygon include a circle and an ellipse.

When the latent heat storage material molded body is cut along a plane in such a manner that the cut area is maximized, in a case where the shape of the plane of the cut surface (the shape of the outer periphery) is a polygon, the major axis (in a case of a circle, diameter) of an ellipse (including a circle) inscribed in the polygon may be 0.5 mm or more, 1 mm or more, 2 mm or more, 5 mm or more, 1 cm or more, or 10 cm or more. The upper limit of the major axis is not particularly limited, and may be 200 cm or less, 150 cm or less, 100 cm or less, 50 cm or less, or 25 cm or less. That is, the major axis may be 0.5 mm or more and 200 cm or less, 0.5 mm or more and 150 cm or less, 0.5 mm or more and 100 cm or less, 0.5 mm or more and 50 cm or less, 0.5 mm or more and 25 cm or less, 1 mm or more and 200 cm or less, 1 mm or more and 150 cm or less, 1 mm or more and 100 cm or less, 1 mm or more and 50 cm or less, 1 mm or more and 25 cm or less, 2 mm or more and 200 cm or less, 2 mm or more and 150 cm or less, 2 mm or more and 100 cm or less, 2 mm or more and 50 cm or less, 2 mm or more and 25 cm or less, 5 mm or more and 200 cm or less, 5 mm or more and 150 cm or less, 5 mm or more and 100 cm or less, 5 mm or more and 50 cm or less, 5 mm or more and 25 cm or less, 1 cm or more and 200 cm or less, 1 cm or more and 150 cm or less, 1 cm or more and 100 cm or less, 1 cm or more and 50 cm or less, 1 cm or more and 25 cm or less, 10 cm or more and 200 cm or less, 10 cm or more and 150 cm or less, 10 cm or more and 100 cm or less, 10 cm or more and 50 cm or less, or 10 cm or more and 25 cm or less. When the major axis is within the above range, a filling operation is facilitated as a heat storage material. Here, the polygon includes a triangle, a quadrangle, a pentagon, a hexagon, and the like.

In a case where the latent heat storage material molded body according to one embodiment has a cylindrical shape, the lower limit of the diameter of the bottom surface is preferably 0.5 mm or more, more preferably 1 mm or more, even more preferably 2 mm or more, particularly preferably 3 mm or more, and particularly preferably 4 mm or more. The upper limit of the diameter of the bottom surface is preferably 20 mm or less, more preferably 15 mm or less, even more preferably 10 mm or less, and particularly preferably 8 mm or less. That is, in a case where the latent heat storage material molded body has a cylindrical shape, the diameter of the bottom surface thereof may be 1 mm or more and 20 mm or less, 1 mm or more and 15 mm or less, 1 mm or more and 10 mm or less, 1 mm or more and 8 mm or less, 2 mm or more and 20 mm or less, 2 mm or more and 15 mm or less, 2 mm or more and 10 mm or less, 2 mm or more and 8 mm or less, 3 mm or more and 20 mm or less, 3 mm or more and 15 mm or less, 3 mm or more and 10 mm or less, 3 mm or more and 8 mm or less, 4 mm or more and 20 mm or less, 4 mm or more and 15 mm or less, 4 mm or more and 10 mm or less, or 4 mm or more and 8 mm or less. In the case where the latent heat storage material molded body according to one embodiment has a cylindrical shape, the height of the cylinder is preferably 0.5 mm or more, more preferably 1 mm or more, even more preferably 2 mm or more, particularly preferably 3 mm or more, and particularly preferably 4 mm or more. The upper limit of the height of the cylinder is preferably 20 mm or less, more preferably 15 mm or less, even more preferably 10 mm or less, and particularly preferably 8 mm or less. That is, in the case where the latent heat storage material molded body has a cylindrical shape, the height of the cylinder may be 1 mm or more and 20 mm or less, 1 mm or more and 15 mm or less, 1 mm or more and 10 mm or less, 1 mm or more and 8 mm or less, 2 mm or more and 20 mm or less, 2 mm or more and 15 mm or less, 2 mm or more and 10 mm or less, 2 mm or more and 8 mm or less, 3 mm or more and 20 mm or less, 3 mm or more and 15 mm or less, 3 mm or more and 10 mm or less, 3 mm or more and 8 mm or less, 4 mm or more and 20 mm or less, 4 mm or more and 15 mm or less, 4 mm or more and 10 mm or less, or 4 mm or more and 8 mm or less. When the diameter of the bottom surface and the height in the case where the lower latent heat storage material molded body has a cylindrical shape are within the ranges described above, the filling operation is facilitated as the heat storage material.

**In** addition, the range of the diameter of the bottom surface and the range of the height of the cylinder described above can be appropriately combined. For example, in a case where the diameter of the bottom surface is 1 mm or more and 20 mm or less, the height of the cylinder may be 1 mm or more and 20 mm or less; in a case where the diameter of the bottom surface is 2 mm or more and 15 mm or less, the height of the cylinder may be 2 mm or more and 15 mm or less; in a case where the diameter of the bottom surface is 3 mm or more and 10 mm or less, the height of the cylinder may be 3 mm or more and 10 mm or less; and in a case where the diameter of the bottom surface is 4 mm or more and 8 mm or less, the height of the cylinder may be 4 mm or more and 8 mm or less.

In a case where the latent heat storage material molded body according to one embodiment has a honeycomb shape, the external shape of the latent heat storage material molded body is a substantially prismatic shape or a substantially cylindrical shape having a first end face and a second end face, and further has a plurality of cells penetrating from the first end face to the second end face.

The shape of the first end face and the second end face is not particularly limited, and may be a polygon such as a triangle, a quadrangle, a pentagon, or a hexagon, or may be an ellipse or a circle. The area of each of the first end face and the second end face is not particularly limited, but is preferably 100 cm² or more and 1000 cm² or less, more preferably 150 cm² or more and 750 cm² or less, and even more preferably 200 cm² or more and 500 cm² or less. In addition, in the case where the latent heat storage material molded body has a honeycomb shape, the height of the prismatic column or the cylindrical column is preferably 10 cm or more and 200 cm or less, more preferably 50 cm or more and 150 cm or less, and even more preferably 75 cm or more and 125 cm or less. When the latent heat storage material molded body has the above-described shape, handling as a heat storage material is facilitated.

Furthermore, the shape of a cell is not particularly limited, but the shape of a cross section perpendicular to the direction in which the cell penetrates may be a triangle, a quadrangle, a pentagon, a hexagon, an octagon, a circle, or an ellipse. The area of the cross section perpendicular to the penetrating direction of the cell is not particularly limited, but is preferably 0.05 cm² or more and 25 cm² or less, more preferably 0.1 cm² or more and 15 cm² or less, even more preferably 0.25 cm² or more and 10 cm² or less, and particularly preferably 0.5 cm² or more and 5 cm² or less. When the cross section of the cell is within the above range, the efficiency of heat storage and heat dissipation is improved, which improves the usefulness as a latent heat storage material.

### Method for Producing Latent Heat Storage Material Molded Body

A method for producing a latent heat storage material molded body of the present invention is a method including:
(1) mixing: a latent heat storage material (A) in which a core particle containing an Al-Si alloy is coated with an aluminum oxide film; and a calcium compound (B), in such a manner that a content (mass) proportion of the calcium compound (B) relative to the latent heat storage material (A) is 1 mass% or more and 40 mass% or less to prepare a latent heat storage material composition (step 1);
(2) molding the latent heat storage material composition (step 2); and
(3) firing the molded composition at 700°C or higher (step 3).

### Step 1

This step is a step of mixing a latent heat storage material (A) in which a core particle containing an Al-Si alloy is coated with an aluminum oxide film and a calcium compound (B) in such a manner that the content (mass) proportion of the calcium compound (B) relative to the latent heat storage material (A) is 1 mass% or more and 40 mass% or less to prepare a latent heat storage material composition.

As the latent heat storage material (A) and the calcium compound (B) to be used in this step, preferred embodiments described in the sections of "Latent Heat Storage Material (A)" and "Calcium Compound (B)", respectively, are similarly adopted. Among them, from the viewpoint of improving ease of mixing and processing stability when the latent heat storage material composition is molded, the calcium compound (B) to be used in this step is preferably one or more selected from the group consisting of calcium oxide, calcium hydroxide, calcium carbonate, limestone, gypsum, and wollastonite.

In this step, the latent heat storage material (A) and the calcium compound (B) are mixed in such a manner that the content (mass) proportion of the calcium compound (B) relative to the latent heat storage material (A) in the latent heat storage material composition is 1 mass% or more and 40 mass% or less, and the preferable range of the proportion is the same as the preferable embodiment described in the section of the calcium compound (B) described above. When the proportion is within the above range, a latent heat storage material molded body having good mechanical strength and processing stability while maintaining a favorable heat storage property and a favorable heat dissipation property can be easily prepared.

In this step, the mixing method is not particularly limited as long as components such as the latent heat storage material (A) and the calcium compound (B) are uniformly mixed. However, so-called wet mixing in which the latent heat storage material (A) and the calcium compound (B) are mixed together with a dispersion medium is preferable. When mixing is performed with the dispersion medium, the latent heat storage material (A), the calcium compound (B), and the like can be more uniformly mixed.

The dispersion medium to be used in the wet mixing is not particularly limited, and examples thereof include water, an organic solvent, and a mixture thereof. A single type or two or more types thereof may be used. Examples of the organic solvent include alcohols such as methanol, ethanol, propanol, and isopropanol; glycols such as ethylene glycol and propylene glycol; ketones such as acetone, 2-butanone, and 4-methyl-2-pentanone; glycol ethers such as ethylene glycol monomethyl ether, ethylene glycol monoethyl ether, propylene glycol monoethyl ether, and propylene glycol methyl ether acetate; dimethyl sulfoxide; dimethyl formamide; dimethyl acetamide; and aromatic hydrocarbons such as benzene, toluene, and xylene. Among them, from the viewpoint of the effects of the present invention, the dispersion medium is preferably water and/or a hydrophilic organic solvent (lower alcohols (for example, having 1 to 3 carbon atoms) such as methyl alcohol and isopropyl alcohol; ketones such as acetone; amides such as N,N-dimethylformamide; sulfoxides such as dimethyl sulfoxide; glycols such as ethylene glycol; and the like), and more preferably water and/or a lower alcohol (for example, having 1 to 3 carbon atoms). As the dispersion medium, one used as a dispersion medium used for an inorganic binder or the like may be used in combination.

The dispersion medium to be mixed with the latent heat storage material (A) and the calcium compound (B) is preferably 10 mass% or more and 150 mass% or less, more preferably 15 mass% or more and 100 mass% or less, and even more preferably 20 mass% or more and 90 mass% or less, with respect to the total mass (solid content) of the latent heat storage material (A) and the calcium compound (B). When the amount of the dispersion medium is within this range, the latent heat storage material (A), the calcium compound (B), and the like can be more sufficiently and uniformly mixed.

Note that after the latent heat storage material (A) and the calcium compound (B) are mixed together with the dispersion medium, the mixture is preferably dried to reduce the amount of the dispersion medium used in the mixing to a predetermined amount or less. Thus, the dispersion medium is preferably volatile.

In this step, it is preferable to add an inorganic binder and/or an organic binder, followed by mixing. Note that the types of the inorganic binder and the organic binder, and the content of the binder in the latent heat storage material composition are the same as those described above in the section "Binder". When the binder is added, molding of the latent heat storage material composition is facilitated, cracking and the like of the molded product are reduced, and the mechanical strength is also further improved.

In this step, it is preferable that the latent heat storage material (A) and the calcium compound (B) be mixed, and then the inorganic binder and/or the organic binder be added thereto and mixed. In a case where the latent heat storage material (A) and the calcium compound (B) are mixed together with a dispersion medium, it is preferable that the dispersion medium be sufficiently dried and then the inorganic binder and/or the organic binder be added thereto and mixed. In this manner, the components contained in the latent heat storage material composition can be more uniformly mixed, cracking and the like of the molded product are more effectively suppressed, and the mechanical strength is also further improved.

### Step 2 and Step 3

The method for producing a latent heat storage material molded body according to one embodiment of the present invention includes:
(step 2) molding the latent heat storage material composition prepared in the above step (1) and
(step 3) firing the molded composition at 700°C or higher.

In the step 2, the latent heat storage material composition is preferably molded into one or more shapes selected from the group consisting of a cylindrical shape, a pellet shape, a spherical shape, a ring shape, a plate shape, a rod shape, and a honeycomb shape, and is more preferably molded into a cylindrical shape. With such a shape, the latent heat storage material molded body becomes industrially easy to handle. Note that as the size of the latent heat storage material molded body, the preferable embodiment described in the section of the latent heat storage material molded body is similarly adopted.

In this step 2, a method for molding the latent heat storage material composition into a desired shape is not particularly limited, and examples thereof include uniaxial pressure molding, isotropic pressure molding, injection molding, extrusion molding, rolling granulation, and cast molding. Extrusion molding is suitably used.

In addition, in the step 2 according to one embodiment, a slight amount of a solvent may be added to the latent heat storage material composition, and the latent heat storage material composition and the solvent may be mixed with each other and then molded into a desired shape. As the desired solvent, the "dispersion medium" described in the section of the step 1 is similarly employed. When the latent heat storage material composition and the solvent are mixed and then molded, the shape after molding is easily maintained, and thus the production of the latent heat storage material molded body is facilitated. A preferred solvent is, for example, water.

The firing temperature in the step 3 may be 700°C or higher, preferably 800°C or higher, and more preferably 850°C or higher. The upper limit of the firing temperature is not particularly limited, but is preferably lower than 1200°C, more preferably 1100°C or lower, and even more preferably 1000°C or lower. That is, the firing temperature may be 700°C or higher and lower than 1200°C, 700°C or higher and 1100°C or lower, 700°C or higher and 1000°C or lower, 800°C or higher and lower than 1200°C, 800°C or higher and 1100°C or lower, 800°C or higher and 1000°C or lower, 850°C or higher and lower than 1200°C, 850°C or higher and 1100°C or lower, or 850°C or higher and 1000°C or lower. When the firing temperature is in the above range, the strength of the molded body becomes more sufficient, and metal leakage from the latent heat storage material (A) becomes more difficult to occur.

In the production method according to one embodiment, in a case where the latent heat storage material composition and a dispersion liquid are mixed in the step 2, a step of drying the molded latent heat storage material composition (precursor of the latent heat storage material molded body) may be provided between the step 2 and the step 3. With this step, it is possible to effectively suppress occurrence of defects such as cracking in the produced latent heat storage material molded body.

The production method according to one embodiment may further include a degreasing step of heating the molded latent heat storage material composition at a predetermined temperature before firing in the step 3. Here, the predetermined temperature in the degreasing step is not particularly limited, but is preferably 250°C or higher and 600°C or lower. Further, in the degreasing step, the predetermined temperature is preferably maintained for 1 hour or longer and 3 hours or shorter. With the degreasing step, it is possible to remove the organic binder and the like contained in the latent heat storage material composition molded in the step 2, and it is possible to effectively suppress the occurrence of defects such as cracking in the latent heat storage material molded body.

The latent heat storage material molded body produced by the production method according to one embodiment may contain calcium in an amount of 3 mass% or more and less than 20 mass% in terms of oxide. For the more preferable range of the amount of calcium contained in the latent heat storage material molded body, the preferable embodiment described in the section of the latent heat storage material molded body is similarly adopted. When the content of calcium (in terms of oxide) is within these ranges, the latent heat storage material molded body has more sufficient mechanical strength.

Note that in the method for producing a latent heat storage material molded body according to one embodiment of the present invention, thermal oxidation treatment of the heat storage latent heat material (A) and the firing in the step 3 can be performed at the same time. The thermal oxidation treatment of the heat storage latent heat material (A) and the firing of the molded body may be performed separately. When the thermal oxidation treatment and the firing in the step 3 are performed at the same time, the production process can be simplified, and improvement in production efficiency and reduction in production cost can be expected.

### Examples

Hereinafter, the present invention will be described in more detail by way of Examples, but the present invention is not limited only to these Examples. Note that "parts" represents "parts by mass" and "%" represents "mass%" unless otherwise specified. In addition, unless otherwise specified, operations were performed at room temperature (25°C).

In the present Examples, measurement of an average particle size and composition analysis of a molded body were performed in accordance with the methods described below.

### Measurement of Average Particle Size

### Average particle size of core particle

Measurement was performed using a laser diffraction-type particle size distribution meter LA-950V2 available from HORIBA, Ltd. To be specific, an Al-Si alloy was dispersed in an aqueous solution in which 0.2 wt.% of sodium pyrophosphate (available from FUJIFILM Wako Pure Chemical Corporation) was dissolved, and measurement was performed with the particle size distribution meter. Note that a value of a cumulative 50% volume diameter was taken as the average particle size.

### Average particle size of latent heat storage material (A-1)

Measurement was performed using a laser diffraction-type particle size distribution meter LA-950V2 available from HORIBA, Ltd. To be specific, a latent heat storage material (A-1) was dispersed in an aqueous solution in which 0.2 wt.% of sodium pyrophosphate (available from FUJIFILM Wako Pure Chemical Corporation) was dissolved, and measurement was performed with the particle size distribution meter. Note that a value of a cumulative 50% volume diameter was taken as the average particle size.

### Composition Analysis of Molded Body

The composition analysis of the molded body was performed using an ICP emission spectrophotometer (hereinafter, referred to as ICP) of iCAP 6000 SERIES available from Thermo Fisher Scientific Inc. A concentration of each element was analyzed by ICP and then conversion was performed in terms of oxide.

Latent heat storage material compositions and latent heat storage material compositions of Examples and Comparative Examples were prepared according to the following procedure.

### Preparation of Al-Si alloy

Core particles composed of an Al-Si alloy (Al-12 wt.% Si) in which a mass ratio of Al was 88 mass% and a mass ratio of Si was 12 mass% were prepared. The core particles had an average particle size of 31.9 µm and a cumulative 90% volume size of 48.4 µm.

### Preparation of latent heat storage material (A-1)

300 g of water was put in a 1-L flask. The water was heated in an oil bath while being stirred at 150 rpm with a stirring blade. After the water temperature was measured and reached 100°C, 1 g of aluminum hydroxide (available from Taimei Chemicals Co., Ltd.) having boehmite crystals was added and dispersed. Thereafter, aqueous ammonia adjusted to 1 M was added, and the pH of the dispersion liquid was adjusted to be in a range of 9.0 to 9.5 when measured at normal temperature. Into the dispersion liquid after the pH adjustment, 10 g of the Al-Si alloy was put. After the putting, stirring was continued at 100°C for 2 hours while performing pH adjustment, and then cooling was performed. After cooling, excess aluminum hydroxide was removed by decantation, suction filtration was performed, and drying was performed to prepare a powdery latent heat storage material (A-1). The average particle size of the resulting latent heat storage material (A-1) was 38.8 µm.

### Production of Latent Heat Storage Material Composition

### Example 1

Wollastonite was used as the calcium compound (B). To be specific, 4.0 g of the latent heat storage material (A-1) of Synthesis Example 1 and 1.0 g of wollastonite (available from Kinsei Matec Co., Ltd., article name: SH-1250) were weighed in an evaporation dish, and 3.1 g of ethanol was added thereto to be mixed in a wet state. After the mixture was allowed to stand at room temperature for about 1 hour to be sufficiently dried, 0.1 g of methyl cellulose (article name: METOLOSE (trade name), available from Shin-Etsu Chemical Co., Ltd.) was added thereto and mixed to prepare a latent heat storage material composition. Subsequently, water was added to the latent heat storage material composition to prepare a green body, and the green body was charged into a metal mold and extruded to form ten precursors of cylindrical molded bodies. Each of the precursors was dried overnight (about 12 hours) at 60°C and then fired to prepare a cylindrical latent heat storage material molded body containing 81 mass% of a latent heat storage material and 19 mass% of oxides and having a shape of Φ 5 mm × H 5 mm.

Here, the precursor of the molded body was fired using an HPM-1G type gas replacement muffle furnace available from AS ONE CORPORATION. To be specific, a ceramic crucible containing the cylindrical molded body was placed in the muffle furnace and fired under a flow of air at 1.0 L/min at a heating rate of 5°C/min under firing conditions of 1000°C and 1 h to prepare a latent heat storage material molded body. Note that when the temperature reached 530°C, degreasing was performed by maintaining the temperature (530°C) for 2 hours to remove the organic binder.

Note that the resulting latent heat storage material molded body was subjected to composition analysis using ICP, and as a result, the calcium concentration was 10.1 mass% (in terms of oxide).

### Example 2

As the calcium compound (B), a milcon, which is a mixture of calcium carbonate as the calcium compound (B) and sepiolite, was used instead of wollastonite used in Example 1 to prepare a latent heat storage material molded body. The content of calcium carbonate as the calcium compound (B) in the milcon was about 15.2 mass%.

To be specific, 3.5 g of the latent heat storage material (A-1) and 1.5 g of the milcon (available from Showa KDE Co., Ltd., article name: MS-2), which is a mixture of calcium carbonate and sepiolite, were weighed in an evaporation dish, and 3.9 g of ethanol was added thereto and mixed while being in a wet state. After the mixture was allowed to stand at room temperature for about 1 hour to be sufficiently dried, 0.1 g of methyl cellulose (article name: METOLOSE (trade name), available from Shin-Etsu Chemical Co., Ltd.) was added thereto and mixed to prepare a latent heat storage material composition. Subsequently, water was added to the latent heat storage material composition to prepare a green body, and the green body was charged into a metal mold and extruded to form ten precursors of cylindrical molded bodies. Each of the precursors was dried overnight (about 12 hours) at 60°C and then fired under the same conditions as in Example 1 to prepare a cylindrical latent heat storage material molded body containing 76 mass% of a latent heat storage material and 24 mass% of oxides and having a shape of Φ 5 mm × H 5 mm. Note that the resulting latent heat storage material molded body was subjected to composition analysis using ICP, and as a result, the calcium concentration was 5.1 mass% (in terms of oxide).

### Example 3

As the calcium compound (B), calcium hydroxide was used instead of wollastonite used in Example 1 to prepare a latent heat storage material molded body.

To be specific, 4.0 g of the latent heat storage material (A-1) and 1.0 g of calcium hydroxide (available from FUJIFILM Wako Pure Chemical Corporation) were weighed in an evaporation dish, and 2.6 g of ethanol was added thereto and mixed while being in a wet state. After the mixture was allowed to stand at room temperature for about 1 hour to be sufficiently dried, 0.1 g of methyl cellulose (article name: METOLOSE (trade name), available from Shin-Etsu Chemical Co., Ltd.) was added thereto and mixed to prepare a latent heat storage material composition. Subsequently, water was added to the latent heat storage material composition to prepare a green body, and the green body was charged into a metal mold and extruded to form ten precursors of cylindrical molded bodies. The precursor was dried overnight (about 12 hours) at 60°C and then fired under the same conditions as in Example 1 to prepare a cylindrical latent heat storage material molded body containing 84 mass% of a latent heat storage material and 16 mass% of oxides and having a shape of Φ 5 mm × H 5 mm. Note that the resulting latent heat storage material molded body was subjected to composition analysis using ICP, and as a result, the calcium concentration was 18.2 mass% (in terms of oxide).

### Example 4

As the calcium compound (B), calcium carbonate was used instead of wollastonite used in Example 1 to prepare a latent heat storage material molded body.

To be specific, 4.0 g of the latent heat storage material (A-1) and 1.0 g of calcium carbonate (available from FUJIFILM Wako Pure Chemical Corporation) were weighed and put into a mortar, and 2.3 g of ethanol was added thereto and mixed while being in a wet state. After the mixture was allowed to stand at room temperature for about 1 hour to be sufficiently dried, 0.1 g of methyl cellulose (article name: METOLOSE (trade name), available from Shin-Etsu Chemical Co., Ltd.) was added thereto and mixed to prepare a latent heat storage material composition. Subsequently, water was added to the latent heat storage material composition to prepare a green body, and the green body was charged into a metal mold and extruded to form ten precursors of cylindrical molded bodies. Each of the precursors was dried overnight (about 12 hours) at 60°C and then fired under the same conditions as in Example 1 to prepare a cylindrical latent heat storage material molded body containing 88 mass% of a latent heat storage material and 12 mas% of oxides and having a shape of Φ 5 mm × H 5 mm. Note that the resulting latent heat storage material molded body was subjected to composition analysis using ICP, and as a result, the calcium concentration was 13.6 mass% (in terms of oxide).

### Example 5

As the calcium compound (B), calcium carbonate instead of wollastonite used in Example 1 and silica derived from silica sol as another additive were used in combination to prepare a latent heat storage material molded body.

To be specific, 4.0 g of the latent heat storage material (A-1), 0.8 g of calcium carbonate (available from FUJIFILM Wako Pure Chemical Corporation), 1.2 g of silica sol (available from Nissan Chemical Corporation, solid concentration: 20.3 mass%, article name: SNOWTEX (trade name) N), 0.1 g of methyl cellulose (article name: METOLOSE (trade name), available from Shin-Etsu Chemical Co., Ltd.) were mixed to prepare a latent heat storage material composition. Subsequently, water was added to the latent heat storage material composition to prepare a green body, and the green body was charged into a metal mold and extruded to form a precursor of a cylindrical molded body. The precursor was dried at 60°C overnight (about 12 hours), and then fired under the same conditions as in Example 1 to prepare a cylindrical latent heat storage material molded body containing 86 mass% of a latent heat storage material and 14 mass% of oxides and having a shape of Φ 5 mm × H 5 mm. Note that the resulting latent heat storage material molded body was subjected to composition analysis using ICP, and as a result, the calcium concentration was 9.0 mass% (in terms of oxide).

### Example 6

Wollastonite was used as the calcium compound (B) in the same manner as in Example 1, and silica derived from silica sol and aluminum oxide were used together as other additives to prepare a latent heat storage material molded body.

To be specific, 40.0 g of the latent heat storage material (A-1), 3.5 g of wollastonite (available from Kinsei Matec Co., Ltd.), 19.7 g of silica sol (available from Nissan Chemical Corporation, solid concentration: 20.3 mass%, article name: SNOWTEX (trade name) N), 2.5 g of alumina (article name: AS-50, available from Resonac Holdings Corporation, average particle size: 9.8 µm), and 0.2 g of methyl cellulose (article name: METOLOSE (trade name), available from Shin-Etsu Chemical Co., Ltd.) were mixed to prepare a latent heat storage material composition. Subsequently, water was added to the latent heat storage material composition to prepare a green body, and the green body was charged into a metal mold and extruded to form ten precursors of cylindrical molded bodies. Each of the precursors was dried at 60°C overnight (about 12 hours), and then fired under the same conditions as in Example 1 to prepare a cylindrical latent heat storage material molded body containing 80 mass% of a latent heat storage material and 20 mass% of oxides and having a shape of Φ 6.7 mm × H 6.7 mm. Note that the resulting latent heat storage material molded body was subjected to composition analysis using ICP, and as a result, the calcium concentration was 3.7 mass% (in terms of oxide).

### Comparative Example 1

Glass frit (available from AGC Inc., article name: CM251-ZL) was used instead of wollastonite (calcium compound (B)) used in Example 1 to prepare a latent heat storage material molded body of Comparative Example 1.

To be specific, 3.5 g of the latent heat storage material (A-1) and 1.5 g of glass frit were weighed and put into a mortar, and 2.3 g of ethanol was added thereto and mixed while being in a wet state. After the mixture was allowed to stand at room temperature for about 1 hour to be sufficiently dried, 0.1 g of methyl cellulose (article name: METOLOSE (trade name), available from Shin-Etsu Chemical Co., Ltd.) was added thereto and mixed to prepare a composition of Comparative Example 1. Subsequently, water was added to the composition to prepare a green body, and the green body was charged into a metal mold and extruded to form ten precursors of cylindrical molded bodies. Each of the precursors was dried at 60°C overnight (about 12 hours) and then fired under the same conditions as in Example 1 to prepare a cylindrical molded body containing 70 mass% of a latent heat storage material and 30 mass% of oxides and having a shape of Φ 5 mm × H 5 mm. Note that the molded body of Comparative Example 1 was subjected to composition analysis using ICP in the same manner as in Example 1, and as a result, the calcium concentration was 0.2 mass% (in terms of oxide).

### Comparative Example 2

Glass fibers (available from Tosoh SGM Corporation, article name: Quartz wool coarse) were used instead of wollastonite used in Example 1 to prepare a latent heat storage material molded body of Comparative Example 2.

To be specific, 3.5 g of the latent heat storage material (A-1) and 1.5 g of glass fibers were weighed and put into a mortar, and 2.3 g of ethanol was added thereto and mixed while being in a wet state. After the mixture was allowed to stand at room temperature for about 1 hour to be sufficiently dried, 0.1 g of methyl cellulose (article name: METOLOSE (trade name), available from Shin-Etsu Chemical Co., Ltd.) was added thereto and mixed to prepare a composition of Comparative Example 2. Subsequently, water was added to the composition to prepare a green body, and the green body was charged into a metal mold and extruded to form ten precursors of cylindrical molded bodies. After each of the precursors was dried at 60°C overnight (about 12 hours), firing was performed under the same conditions as in Example 1 to prepare a cylindrical molded body containing 70 mass% of a latent heat storage material and 30 mass% of oxides and having a shape of Φ 5 mm × H 5 mm. Note that the molded body of Comparative Example 2 was subjected to composition analysis using ICP in the same manner as in Example 1, and as a result, the calcium concentration was 0.1 mass% (in terms of oxide).

### Comparative Example 3

Silica derived from silica sol was used instead of wollastonite used in Example 1 to prepare a latent heat storage material molded body of Comparative Example 3.

To be specific, 3.5 g of the latent heat storage material (A-1) and silica sol (available from Nissan Chemical Corporation, article name: SNOWTEX N (trade name)) were weighed to have a solid content of 1.5 g, put into a mortar, and allowed to stand at room temperature for about 1 hour while being in a wet state. However, the mixture was not dried, and thus the mixture was additionally dried at 80°C overnight (about 12 hours). After drying, 0.1 g of methyl cellulose (article name: METOLOSE (trade name), available from Shin-Etsu Chemical Co., Ltd.) was added thereto and mixed to prepare a composition of Comparative Example 3. Subsequently, water was added to the composition to prepare a green body, and the green body was charged into a metal mold and extruded to form ten precursors of cylindrical molded bodies. After each of the precursors was dried at 60°C overnight (about 12 hours), firing was performed under the same conditions as in Example 1 to prepare a cylindrical molded body containing 70 mass% of a latent heat storage material and 30 mass% of oxides and having a shape of Φ 5 mm × H 5 mm. Note that the molded body of Comparative Example 3 was subjected to composition analysis using ICP in the same manner as in Example 1, and as a result, the calcium concentration was 0.1 mass% (in terms of oxide).

### Comparative Example 4

A latent heat storage material molded body of Comparative Example 4 was prepared without using a compound corresponding to the calcium compound (B).

To be specific, the latent heat storage material (A-1) was weighed to be 5.0 g, and 0.1 g of methyl cellulose (article name: METOLOSE (trade name), available from Shin-Etsu Chemical Co., Ltd.) was added thereto, followed by mixing in a mortar to prepare a composition of Comparative Example 4. Subsequently, water was added to the composition to prepare a green body, and the green body was charged into a metal mold and extruded to form ten precursors of cylindrical molded bodies. After each of the precursors was dried at 60°C overnight (about 12 hours), firing was performed under the same conditions as in Example 1 to prepare a cylindrical molded body containing 100 mass% of a latent heat storage material and 0 mass% of oxides and having a shape of Φ 5 mm × H 5 mm. Note that the molded body of Comparative Example 4 was subjected to composition analysis using ICP in the same manner as in Example 1, and as a result, the calcium concentration was 0.1 mass% (in terms of oxide).

Metal leakage, moldability, and crushing strength were evaluated for each sample of heat storage material molded bodies of Examples 1 to 6 and the molded bodies of Comparative Examples 1 to 4 prepared as described above. Each evaluation was performed in accordance with the following evaluation methods. The results are shown in Table 1.

### Metal Leakage

Presence or absence of a foreign matter having metallic luster on a surface of the sample was visually confirmed. When no foreign matter having metallic luster was confirmed, it was determined that metal leakage was "absent", and when one or more foreign matters having metallic luster were confirmed, it was determined that metal leakage was "present".

### Moldability

Among the 10 samples, in a case where the proportion of individual bodies having no defect in appearance such as cracking or chipping was 70% or more, the moldability was determined to be good and acceptable, and in a case where the proportion was less than 70%, the moldability was determined to be poor and unacceptable. For example, as shown in Table 1, in Example 1, no defect in appearance such as cracking or chipping was observed in nine of the ten samples of the heat storage material molded bodies prepared as described above. Thus, in the heat storage material molded body of Example 1, the proportion of individual bodies having no defect in appearance was 90%, and the moldability was good, and the result was "acceptable".

### Strength Test

Among the samples, those having no defect in appearance such as cracking or chipping were measured for the crushing strength when pressurized from a side surface of the cylindrical sample, using a Kiya-type hardness meter. The measurement was performed one by one, and a total of five measurements were performed. Those in which the average value of the five measurement results was 200 N or more were determined as acceptable, and those in which the average value was less than 200 N were determined as unacceptable. Note that Comparative Example 3 was unacceptable in the moldability test, and thus this test was not performed.

**[Table 1]**

| | Metal leakage | Moldability | Crushing strength |
|---|---|---|---|
| Example 1 | Absent | 90% | 200 N or more |
| Example 2 | Absent | 80% | 200 N or more |
| Example 3 | Absent | 80% | 200 N or more |
| Example 4 | Absent | 90% | 200 N or more |
| Example 5 | Absent | 70% | 200 N or more |
| Example 6 | Absent | 80% | 200 N or more |
| Comparative Example 1 | Present | 90% | 170 N |
| Comparative Example 2 | Present | 90% | 200 N or more |
| Comparative Example 3 | Absent | 40% | - |
| Comparative Example 4 | Present | 80% | 160 N |

As shown in Table 1, the heat storage material molded bodies of Examples 1 to 6 were able to have favorable results in all of the metal leakage, the moldability, and the crushing strength. In contrast, in the molded body of Comparative Example 1, metal leakage was confirmed and the crushing strength was also low. In addition, the molded body of Comparative Example 2 was confirmed to have metal leakage, the molded body of Comparative Example 3 was inferior in moldability, and the molded body of Comparative Example 4 was confirmed to have metal leakage and was also inferior in crushing strength.

Subsequently, for each sample of the heat storage material molded bodies of Examples 1 to 6 and the molded bodies prepared in Comparative Examples 1 to 4, a heat storage amount was measured in accordance with the following method.

### Heat Storage Amount Measurement

The heat storage amount was measured by TG-DSC (available from TA Instruments Inc., article name: SDT650). The cylindrical sample prepared in Example 1 was pulverized in a mortar. The pulverized sample was placed in an alumina sample pan and heated to 700°C at a heating rate of 10°C/min under a nitrogen gas flow of 20 mL/min, and the heat storage amount (latent heat amount/heat absorption amount) was measured (first time). Thereafter, the temperature was lowered to 500°C at a temperature lowering rate of 5°C/min, and a heat dissipation amount (latent heat amount/heat generation amount) was measured (first time). The temperature was raised again to 700°C at a temperature raising rate of 10°C/min, and the heat storage amount (latent heat amount/heat absorption amount) was measured (second time). Thereafter, the temperature was lowered to 500°C at a temperature lowering rate of 5°C/min, and the heat dissipation amount (latent heat amount/heat generation amount) was measured. (Second time). Further, the same operation as the second time was repeated again, and the heat storage amount (latent heat amount/heat absorption amount) and the heat dissipation amount (latent heat amount/heat generation amount) were measured (third time). As an example, the results of Example 1 are shown in Table 2.

**[Table 2]**

| First time | | Second time | | Third time | |
|---|---|---|---|---|---|
| Heat storage amount (J/g) | Heat dissipation amount (J/g) | Heat storage amount (J/g) | Heat dissipation amount (J/g) | Heat storage amount (J/g) | Heat dissipation amount (J/g) |
| 251.3 | 246.0 | 250.9 | 245.7 | 250.2 | 248.1 |

As can be seen from the above results, in the latent heat storage material molded body prepared in Example 1, even when the measurement was repeated three times, a decrease in the heat storage amount and the heat dissipation amount was not observed. That is, it was confirmed that the latent heat storage material molded body prepared in Example repeatedly functioned as a heat storage body. In addition, the latent heat storage material molded bodies prepared in Examples 2 to 6 were also able to have the same results as in Example 1. In contrast, in the molded bodies of Comparative Examples 1 to 4, when the measurement was repeated three times, the heat storage amount and the heat dissipation amount were decreased.

The present application is based on Japanese Patent Application No. 2022-172814 filed on October 28, 2022, the disclosure of which is incorporated herein by reference in its entirety.

## Claims

1. A latent heat storage material composition comprising:
a latent heat storage material (A) in which a core particle containing an Al-Si alloy is coated with an aluminum oxide film; and
a calcium compound (B),
wherein
a content proportion of the calcium compound (B) relative to the latent heat storage material (A) is 1 mass% or more and 40 mass% or less.

2. The latent heat storage material composition according to claim 1, further comprising an inorganic binder and/or an organic binder.

3. The latent heat storage material composition according to claim 1 or 2,
wherein the calcium compound (B) is one or more selected from the group consisting of calcium oxide, calcium hydroxide, calcium carbonate, limestone, gypsum, and wollastonite.

4. A latent heat storage material molded body produced by molding the latent heat storage material composition described in any one of claims 1 to 3.

5. The latent heat storage material molded body according to claim 4, wherein the latent heat storage material molded body contains calcium in an amount of 3 mass% or more and less than 20 mass% in terms of oxide.

6. The latent heat storage material molded body according to claim 4 or 5,
wherein the latent heat storage material molded body has one or more shapes selected from the group consisting of a cylindrical shape, a pellet shape, a spherical shape, a ring shape, a plate shape, a rod shape, and a honeycomb shape.

7. A method for producing a latent heat storage material molded body, the method comprising:
(1) mixing: a latent heat storage material (A) in which a core particle containing an Al-Si alloy is coated with an aluminum oxide film; and a calcium compound (B), in such a manner that a content (mass) proportion of the calcium compound (B) relative to the latent heat storage material (A) is 1 mass% or more and 40 mass% or less to prepare a latent heat storage material composition;
(2) molding the latent heat storage material composition; and
(3) firing the molded composition at 700°C or higher.

8. The production method according to claim 7, further comprising adding an inorganic binder and/or an organic binder, followed by mixing.

9. The production method according to claim 7 or 8, wherein the calcium compound (B) is one or more selected from the group consisting of calcium oxide, calcium hydroxide, calcium carbonate, limestone, gypsum, and wollastonite.

10. The production method according to any one of claims 7 to 9, wherein the latent heat storage material composition is molded into one or more shapes selected from the group consisting of a cylindrical shape, a pellet shape, a spherical shape, a ring shape, a plate shape, a rod shape, and a honeycomb shape.

11. The production method according to any one of claims 7 to 10, wherein the latent heat storage material molded body contains calcium in an amount of 3 mass% or more and less than 20 mass% in terms of oxide.

12. The production method according to any one of claims 7 to 11, wherein the latent heat storage material (A) and the calcium compound (B) are mixed together with a dispersion medium.
